# EUROPEAN PATENT APPLICATION

(11) **EP 1 342 512 A1**
(43) Date of publication of application: **10.09.2003**
(21) Application number: 01270388.0
(22) Date of filing: 05.12.2001
(51) Int. Cl.: B09B 5/00, B29B 17/02, H01J 9/52

(54) **DEVICE AND METHOD FOR PEELING FILM**

(30) Priority: 11.12.2000 JP 2000376624
(71) Applicant: Sony Corporation, Tokyo 141-0001 (JP)
(72) Inventor: OHWADA, Yoshiaki, c/o SONY CORPORATION, Tokyo 141-0001 (JP); OZEKI, Akio, c/o SONY CORPORATION, Tokyo 141-0001 (JP); YUDA, Takeshi, c/o SONY CORPORATION, Tokyo 141-0001 (JP); OGAWA, Kunio, c/o SONY CORPORATION, Tokyo 141-0001 (JP)
(74) Representative: Nicholls, Michael John
(86) International application number: JP0110643
(87) International publication number: WO02047835

(57) **Abstract**

An apparatus for stripping a film according to the invention is an apparatus for stripping a film adhered to an outer surface of an article such as a CRT. The apparatus includes a stage for mounting the article with film-adhered surface of the article oriented upward, and an edge for stripping one end of the film adhered to the outer surface of the article. The apparatus further includes stripping means allowing the edge to be heated, clamp means for clamping the one end of the film stripped by stripping means, and moving means for moving the clamp means. Thus, the apparatus can quickly and securely strip the film adhered to the outer surface of the article with ease.

## Description

### TECHNICAL FILED

The invention relates to a method and an apparatus for stripping, in a simple manner, a film adhered on a surface of an article such as a surface of panel of a cathode ray tube, wherein stripping means with a heated edge strips the film adhered on a surface of panel of the cathode ray tube, clamp means clamps stripped end of the film, and then moving means moves the clamp means.

### BACKGROUND ART

The cathode ray tube (hereinafter referred to as CRT) made of glass has a panel covered with a functional film (hereinafter simply referred to as film) having an antireflection coating to prevent the reflection of surrounding scenery in the panel and an antistatic coating to prevent the panel from being dirty.

This film is made of, for example, polyethylene terephthalate (PET), which is adhered to the panel with an adhesive made of acrylic resin. To reuse a condemned CRT, it is melt after the film is striped off the surface of panel to be recycled as glass resources. Stripping of the film from the surface of panel prevents the film and the adhesive from being molten in glass cullet that is the molten glass pellet, thereby avoiding reduction of the purity of the recycling glass.

Stripping of the film from the surface of panel can be achieved by, for example, stripping it with a tool such as a knife, softening the adhesive using chemicals to reduce its adhesion, or softening the adhesive by heating the surface of film with a hot-air blower or the like to reduce the adhesion of the adhesive.

However, stripping the film using a tool such as the knife described above and a slotted screwdriver leads to not only work inefficiency and treacherous, but also very laborious because such tool is slippery on the work.

Softening the adhesive using chemicals to reduce its adhesion has an adverse effect on a human body and the environment. Besides, this procedure has a drawback in that it takes much long to strip the film and requires additional processing of the chemicals used.

Heating the surface of film by a hot-air blower or the like causes the adhesive too soft to make it difficult to strip the film off the surface of panel and causes the molten adhesive to remain on the CRT panel, thereby requiring additional process to remove the residual adhesive. Heating the surface using a gas burner in place of the hot-air blower also makes the film itself molten together with the adhesive, thereby failing to strip them.

Cutting into the boundary between edge of the film and the surface of panel of the CRT film using a sufficient physical shock of an air doctor to blow air at high pressure to it completely fails to strip the film off the surface of panel. Using an ultrasonic oscillatory knife has a problem in that vibratory percussion of a cutting edge of the knife against the glass surface of the CRT sometimes breaks the film. Forced detachment of the film with a rotary brush or the like results in an easily stainable sticky mixture of the film and the adhesive, which is rather dirty, so that the film cannot be perfectly striped.

### DISCLOSURE OF INVENTION

It is, therefore, an object of the invention to provide a method and an apparatus, simple in structure, for quickly and securely stripping a film adhered on a surface of an article.

In accordance with one aspect of the invention, there is provided an apparatus for stripping a film adhered to an outer surface of an article, the apparatus comprising a stage for mounting the article thereon with film-adhered surface of the article oriented upward, stripping means having an edge for stripping one end of the film adhered to the outer surface of the article, the stripping means allowing the edge to be heated, clamp means for clamping the one end of film, the one end being stripped by the stripping means, and moving means for moving the clamp means.

In accordance with another aspect of the invention, there is provided a method of stripping a film adhered to an outer surface of an article, the method comprising steps of mounting the article with film-adhered surface of the article oriented upward, stripping side end of the film adhered to the outer surface of the article with a heated edge, and clamping the side end of film stripped at the above stripping step to further strip the film continuously.

According to the method and the apparatus of the invention for stripping the film, it is possible to soften only the adhesive on the back of the film by a heated edge of the stripping means, thereby allowing the edge to smoothly cut into the boundary and stripping the film. By clamping a forward end thus stripped of the film with the cramp means and by moving the clamp means by the moving means, the film may be easily, quickly, and securely stripped off the outer surface of article, to which the film has been adhered.

### BRIEF DESCRIPTION OF DRAWINGS

Fig. 1 is a schematic perspective view illustrating a configuration of an apparatus for stripping a film off the surface of panel of a CRT according to the invention;
Fig. 2 is a perspective view of a hot knife;
Fig. 3 is a cross sectional view taken along lines A-A of Fig. 2;
Fig. 4 is a cross sectional view taken along lines B-B of Fig. 2;
Fig. 5 is a perspective view of clamp means;
Fig. 6 is a cross sectional view taken along lines C-C of Fig. 5 with a film retaining panel forced against a lower panel;
Fig. 7 is a schematic view of moving means;
Fig. 8 is a plan view in schematic form depicting a relationship between the CRT and the hot knife;
Fig. 9 is a diagram illustrating operations of the apparatus for stripping the film;
Fig. 10A is a fragmentary plan view illustrating Step 1 of a method for stripping a film according to the invention;
Fig. 10B is a fragmentary lateral view illustrating Step 1 thereof;
Fig. 11A is a fragmentary plan view illustrating Step 2 thereof;
Fig. 11B is a fragmentary lateral view illustrating Step 2 thereof, and
Fig. 12 is a diagram illustrating a hot knife according to a second embodiment of the invention.

### BEST MODE FOR CARRING OUT THE INVENTION

Referring to the drawings, embodiments of an apparatus for stripping a film according to the invention will now be described below. Although the invention will be particularly described with reference to a film adhered to a surface of panel of the CRT as an example, the invention is generally applied to an article having an outer surface to which a film is adhered.

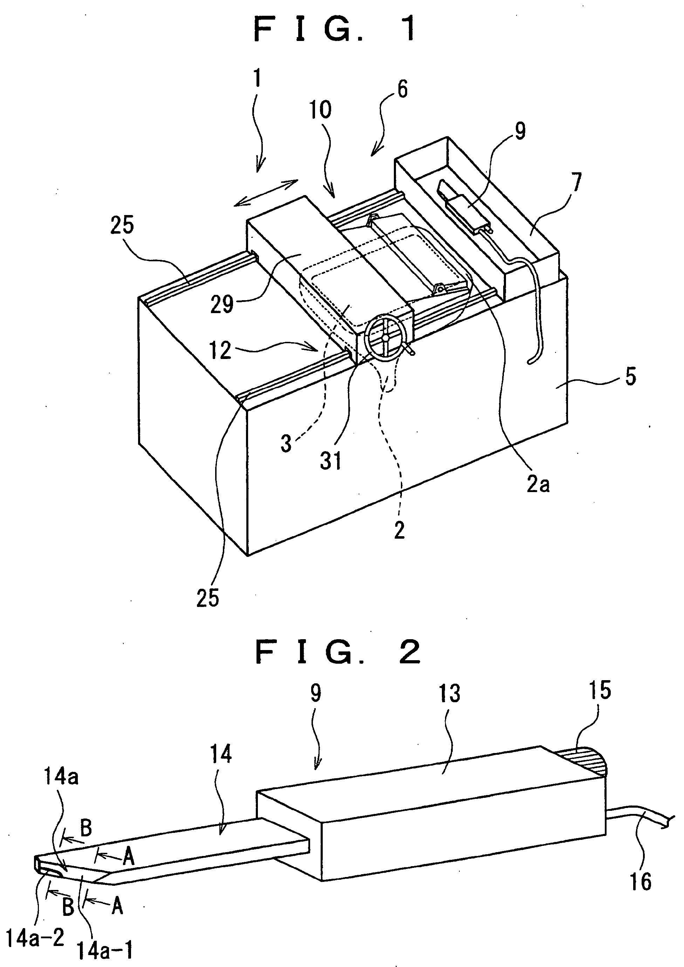

Fig. 1 is a schematic perspective view illustrating a configuration of the apparatus for stripping the film adhered to the surface of panel of the CRT according to the invention The apparatus 1 is designed to strip the film 3 adhered to the surface 2a of panel of the CRT 2 with an adhesive. The apparatus 1 comprises a stage 5 for mounting the CRT 2 thereon, a stripping mechanism 6 mounted above the stage 5, and a tool box 7.

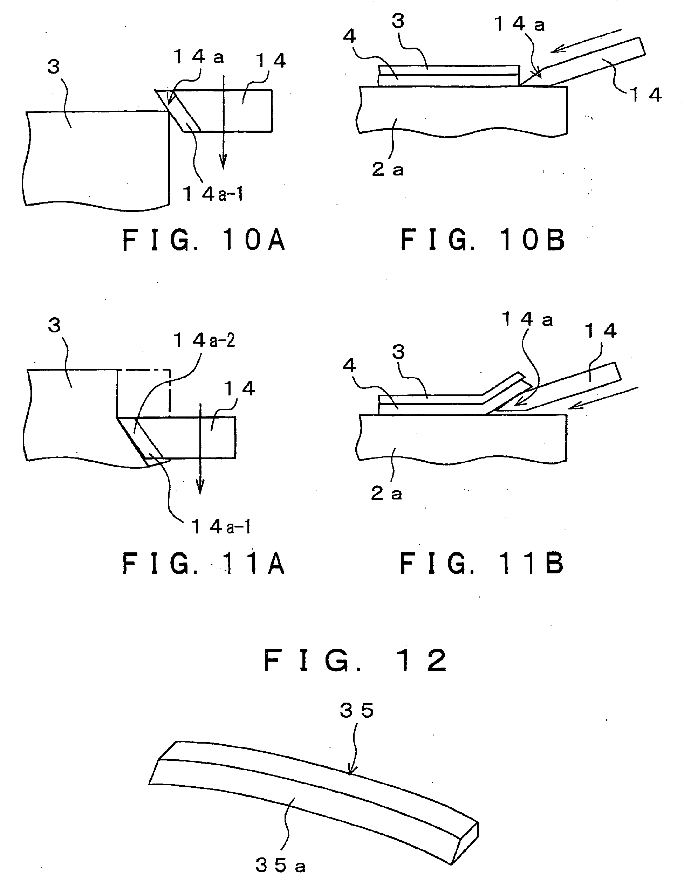

The film 3 is made of, for example, a PET film having a thickness in ranges of 100 to 250 micrometers, and a coat of adhesive 4 having a thickness in the range of 20 to 50 micrometers is adhered to the back of the film (see Fig. 10). An adhesive applied to the film contains 99% of acrylic polymers and 1% of solvent for adhesion

The stripping mechanism 6 comprises a hot knife 9 for allowing it to be heated and for stripping the film 3, clamp means 10 for clamping the forward end of the film 3 thus stripped by the hot knife 9, and moving means 12 for moving the clamp means 10. The tool box 7 is provided to keep thereon tools such as the hot knife 9. Details of the clamp means 10 and moving means 12 will be described later.

The invention permits quick and secure stripping of such film 3 adhered to the surface 2a of the panel of the CRT 2 with ease by stripping the film 3 off the surface 2a of the panel of the CRT 2 with the hot knife 9, and clamping the forward end of the film thus stripped with the clamp means 10, and moving the clamp means 10 using the moving means 12.

Fig. 2 is a perspective view of the hot knife 9. The hot knife 9 has a substantially rectangular shaped grip section 13 for allowing it to be held, a planer knife section 14 forwardly projecting from the grip section 13, and a temperature regulation section (not shown) for controlling a temperature of the knife section 14. The knife section 14 and the temperature regulation section are connected to an end of a code 16, the other end of which is connected with a control panel (not shown). In Fig. 2, the reference number 15 indicates a temperature regulation dial for setting the temperature of the temperature regulation section.

The knife section 14 is illustratively formed into plane, and served as a heater for heating the film 3 and the adhesive 4 on the back of the film 3 to strip them. The knife section 14 has at the leading end thereof an edge 14a. The edge 14a has a sharp edge portion 14a-1 at a front part thereof and a dull edge portion (referred to as break edge portion) 14a-2 at a rear part thereof.

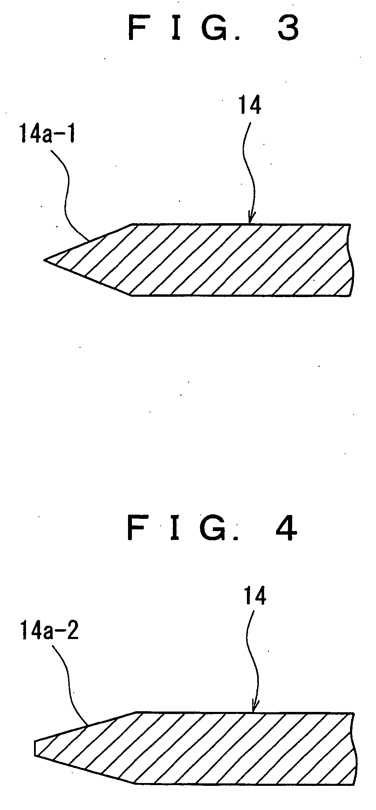

Fig. 3 shows a cross section of the sharp edge portion 14a-1 taken along lines A-A of Fig. 2. The sharp edge portion 14a-1 has a function to cut into a boundary between the film and the surface of panel of the CRT and it has an acute angled tip so that it can easily cut into the boundary between the film and the surface of panel of the CRT.

Fig. 4 shows a cross section of the break edge portion 14a-2 taken along lines B-B of Fig. 2. The break edge portion 14a-2 has a flat tip to prevent the film stripped by the sharp edge portion 14a-1 from being broken in error.

The combinatory arrangement of the sharp edge portion 14a-1 and the break edge portion 14a-2 of the edge 14a of the hot knife 9 is not limited to the one as shown in Fig. 2. Instead, the break edge portion can be positioned at the front part of the edge and the sharp edge portion in rear part of the edge.

The edge 14a of the hot knife 9 may have other various cross-sections such as a ridge-shape cross section, a half ridge cross section, and a slab cross section. In the example shown herein, the knife section 14 is heated by Joule heat. But it may be heated by other means such as, for example, high-frequency induction heating.

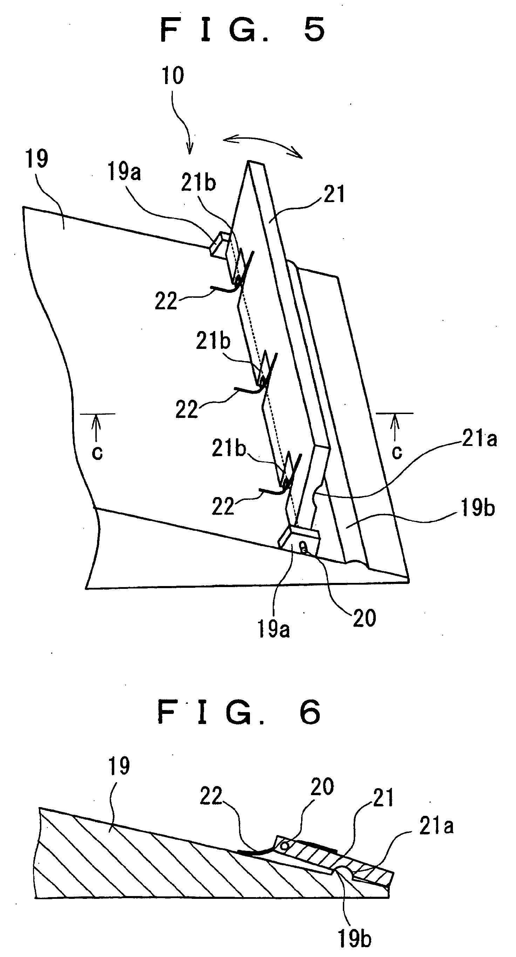

Fig. 5 shows a clamp means 10. Fig. 6 shows a cross section of the clamp means taken along lines C-C of Fig. 5, with a retaining panel 21 pressed against a lower panel 19. As shown in Fig. 5, the clamp means 10 comprises the lower panel 19, the retaining panel 21 supported rotatably with a pair of brackets 19a formed upwardly on the opposite ends of the lower panel 19 and a shaft 20, and springs 22 wound around the shaft 20. A linear transverse protrusion 19b for facilitating seizing the stripped end of the film 3 extends across the lower panel 19 at the forward side thereof relative to the brackets 19a of the lower panel 19.

The brackets 19a, 19a have through-holes both for rotatably supporting opposite ends of the shaft 20 that extends through near one side of the retaining panel 21. Formed in about the middle of the retaining panel 21 is a transverse groove 21a that extends across the retaining panel 21 for engagement with the linear protrusion 19b. The retaining panel 21 also has three hollows 21b at the side where the shaft 20 is extended through with them being spaced apart at prescribed intervals and the respective springs 22 are wound around the shaft 20 in the hollows 21b. One end of each spring 22 abuts on the lower panel 19, while the other end thereof abuts on the retaining panel 21. As a result, the retaining panel 21 is urged to rotate about the shaft 20 by the springs 22 towards the lower panel 19. When engaging the linear protrusion 19b with the groove 21a, they firmly clamp the striped end of the film 3, as shown in Fig. 6.

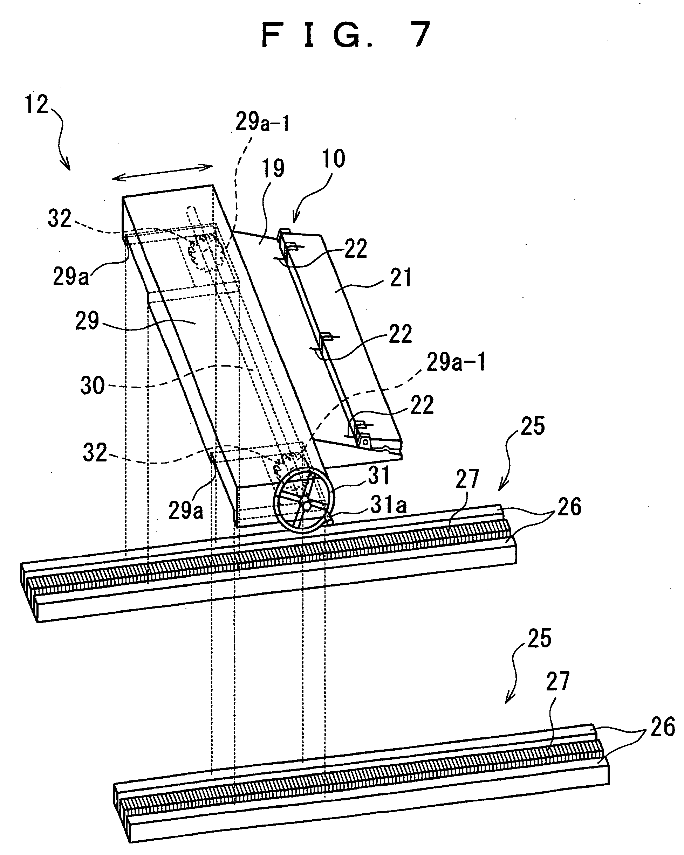

Fig. 7 shows an arrangement of the moving means 12. A pair of LM guides 26 is provided side by side on the upper front end of the stage 5, each guide extending in the longitudinal direction of the stage. In addition, a rack gear 27 is provided between the paired LM guides 26, 26 with it running parallel with them. The LM guides 26, 26 and the rack gear 27 together constitute a guide member 25. There is provided another guide member 25 on the upper rear end of the stage 5.

A slider 29 is mounted on a pair of the guide members 25, 25 with it extending over the pair of guide members so that the slider 29 can move along the length of the guide members. The lower panel 19, namely, the clamp means 10 adjoins the slider 29 with them being formed integral with each other. Formed on the underside of the slider 29 are engaging grooves 29a, 29a for engaging the respective guide members 25, 25. The slider 29 is further provided with a transverse shaft 30 that penetrates the slider 29. A handle 31 is fixed on the front side end of the shaft 30. A lever 31 a for rotating the handle 31 forwardly projects from an appropriate position of an outer ring member of the handle 31. Recesses 29a-1, 29a-1 are further formed in the respective portions in the grooves 29a, 29a of the slider 29, the portion including an intersection of the groove with the shaft 30, and pinion gears 32, 32 for engaging respective rack gears 27, 27 are fixed on the recesses 29a-1, 29a-1 of the shaft 30.

As a result, when the engaging grooves 29a, 29a of the slider 29 engage the respective guide members 25, 25, the rack gears 27, 27 engage the respective pinion gears 32, 32. Rotation of the handle 31 by means of a handling of the lever 31a causes the shaft 30 and hence the pinion gears 32, 32 to be rotated. Since the pinion gears 32, 32 engage the respective rack gears 27, 27, the rotation of the pinion gears 32, 32 cause the slider 29 and the clamp means 10 to move longitudinally.

In the embodiment, the slider 29 has manually been movable using the handle 31. The slider 29, however, may be driven using an actuator such as a motor and a cylinder instead of the handle 31.

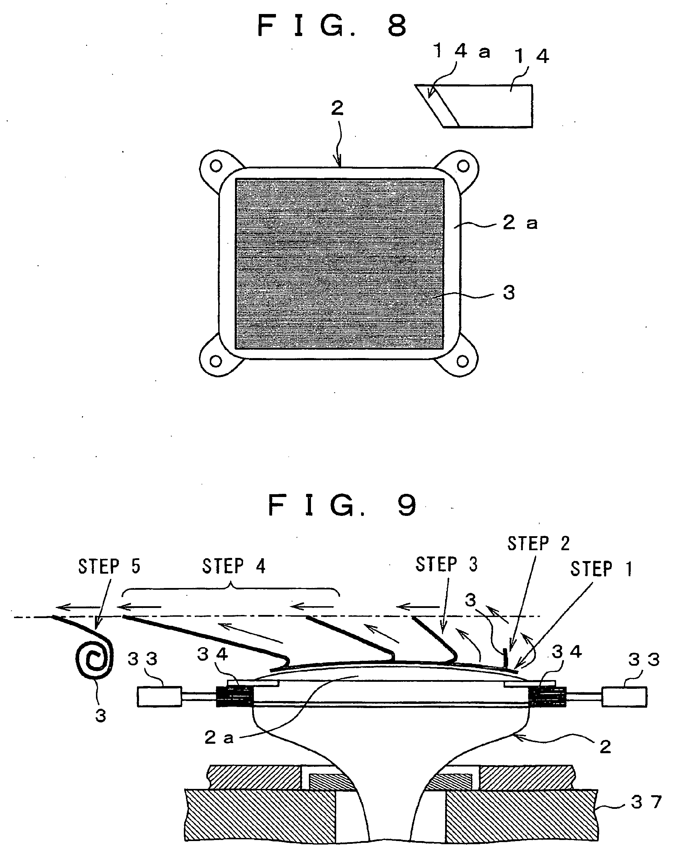

Fig. 8 is a plan view in schematic form depicting a relationship between the CRT 2 and the knife section 14 of the hot knife 9. The film 3 has been adhered to the surface 2a of panel of the CRT 2 using an adhesive by means of a rubber pressure roller of a dedicated adhesive applicator.

Fig. 9 is a diagram illustrating operations of the apparatus 1 for stripping the film. The CRT 2 is held in a upright position within the stage 5 with the surface 2a of panel thereof being oriented upward, the right and left ends thereof being held with rubber members 34, 34 fixed on the free ends of respective cylinder rods of air cylinders 33, 33 and the funnel-shaped end thereof being supported with a mount 37 or the like.

In operation, the edge 14a of the knife section 14 of the hot knife 9 is heated and abutted onto the upper right end of the film 3 (Step 1). The end of the film 3 lined with the adhesive 4 (hereinafter referred to simply as film 3) is stripped with the heated edge 14a of the knife section 14 of the hot knife 9 (Step 2).

The clamp means 10 then clamps the stripped end of the film 3 (Step 3). With the stripped end of the film 3 clamped by the clamp means 10, the handle 31 is rotated counterclockwise with the handling of the lever 31a to allow the slider 29 and the clamp means 10 to move along their moving way to the left, thereby causing the cramped end of the film 3 to be moved to the left to strip the film (Step 4).

As the film 3 is completely stripped off the surface 2a of panel of the CRT 2 by the leftward motion of the slider 29 and the clamp means 10, the film 3 automatically rolls up soon by itself according to a trick of roll-up-behavior due to tensile deformation it had during stripping (Step 5).

Steps 1 and 2 will be further described more in detail Fig. 10A is a fragmentary plan view illustrating Step 1 and Fig. 10B is a fragmentary lateral view illustrating Step 1. Fig. 11A is a fragmentary plan view illustrating Step 2 and Fig. 11B is a fragmentary lateral view illustrating Step 2.

As shown in Figs. 10A and 10B, the edge 14a of the knife section 14 of the hot knife 9 abuts on the upper right end of the film 3 adhered to the panel surface 2a of the CRT 2 with the adhesive 4. As the heated knife section 14 softens the adhesive 4, this allows the sharp edge portion 14a-1 of the edge 14a to smoothly cut into the underside of both of the film 3 and the adhesive 4.

Since the melting point of the adhesive 4 is lower than those of the film 3 and the glass of the CRT 2, the temperature regulation section sets a temperature of the knife section 14 of the hot knife 9 to a temperature close to the melting point of the adhesive 4, thereby softening only the adhesive 4. In this embodiment, the knife section 14 of the hot knife 9 heated to a temperature in the range of 70 to 100 °C is used. Because the softening temperature of the adhesive 4 is very low as compared with the melting points of the film 3 and the glass of the CRT 2, only the adhesive 4 is sufficiently softened or melt to allow the knife section 14 to cut thereinto.

As shown in Figs. 11A and 11B, when user of the hot knife 9 moves the knife section 14a of the hot knife 9 toward himself or herself, the stripped end of the film 3 and the adhesive 4 stripped by the sharp edge portion 14a-1 continuously ride on the break edge portion 14a-2 without being broken.

Since the temperature of the knife section 14 of the hot knife 9 is set close to the melting point of the adhesive 4, only the adhesive 4 is softened or melt, which permits the knife section 14 to cut thereinto without difficulty. Since the edge 14a of the knife section 14 is formed of the sharp edge portion 14a-1 and the break edge portion 14a-2, the sharp edge portion 14a-1 may cut thereinto without difficulty as well as the break edge portion 14a-2 can effectively prevent the stripped film 3 to be broken.

Fig. 12 is a diagram showing a hot knife according to a second embodiment of the invention. The hot knife 35 according to the second embodiment has a generally elongate knife-shape and has an edge 35a on one side thereof. The edge 35a is formed of only a sharp edge portion. When the hot knife 35 is used for the CRT 2 having a surface of panel with convex in the direction of the shorter length thereof, a shape of the hot knife 35 can be set so as to fit the curvature of the surface 2a of panel along the direction of the shorter length thereof. In addition, the shape of the hot knife 35 can be also set so as to freely move upward and downward according to force received from the surface 2a of panel.

The user moves the hot knife 35 toward the film 3 with the hot knife 35 being closely contact with a side end of the surface 2a of panel of the CRT 2 until the edge 35a of the hot knife 35 abuts on a side end of the film 3. The heated knife 35 soften the adhesive 4, thereby enabling the edge 35a to smoothly cut into the underside of both of the film3 and the adhesive 4. Subsequent steps are the same as described above. Accordingly, the side end of the film 3 and the adhesive 4 can be stripped very easily and quickly in an automated manner.

Although the apparatus for stripping the film of the invention has been described with reference to the above preferred embodiments in which the film adhered to the surface 2a of panel of the CRT 2 is stripped, the invention may be applied to any case where a film adhered to the article other than the CRT is tripped. For example, the invention can be used to strip any film such as film covering plasma display or LCD display and to strip deflection plates.

As described above, according to the invention, the heated edge of the knife softens only the adhesive on the back of the film, thereby allowing a smooth cut of the edge and a strip of the film. Clamping the stripped end of the film by the clamping means and moving the clamping means by the moving means allow the film adhered to an outer surface of an article to be easily, quickly, and securely stripped.

Since the apparatus has simple structure, thereby allowing it to be constructed in a manually operable form as well as an automated form, which is cost-effective.

According to the invention, the film can be entirely stripped off an outer surface of an article, so that any further cleaning process, e.g. wiping of the outer surface of the article, is not needed.

The invention does not require any costly thermal energy needed in generating hot air or heating an object to a high temperature, resulting in low running cost.

The film, after stripped by the clamp means and the moving means, automatically rolls up by itself due to the residual distortion created in the film during the forced stripping, thereby allowing an easy-to-process post-removal step.

### INDUSTRIAL APPLICABILITY

As described above, the apparatus for stripping the film according to the invention is suited for stripping a film adhered to an outer surface of an article such as a film covering a CRT, a plasma display or an LCD display, and a deflection panel.

## Claims

1. An apparatus for stripping a film adhered to an outer surface of an article, said apparatus comprising:
a stage for mounting said article thereon with film-adhered surface of said article oriented upward;
stripping means having an edge for stripping one end of the film adhered to said outer surface of said article, said stripping means allowing said edge to be heated;
clamp means for clamping said one end of film, said one end being stripped by said stripping means; and
moving means for moving said clamp means.

2. The apparatus according to claim 1, wherein said edge of said stripping means is longer than a width of said film and permits abutting on said outer surface of said article mounted on said stage.

3. The apparatus according to claim 1, wherein said stripping means allows only an adhesive on the back of said film to soften.

4. The apparatus according to claim 1, wherein a temperature of said edge of said stripping means is set to close to a melting point of said adhesive on the back of said film by means of temperature regulation means.

5. The apparatus according to claim I, wherein said edge of said stripping means comprises:
a sharp edge portion for cutting into a boundary between said outer surface of said article and said film; and
a dull edge portion for preventing a part of said film stripped by said sharp edge portion from being broken.

6. The apparatus according to claim 1, wherein said article is a cathode ray tube.

7. The apparatus according to claim 1, wherein said stripped film automatically rolls up by itself due to tensile deformation and is collected.

8. A method of stripping a film adhered to an outer surface of an article, said method comprising steps of:
mounting said article with film-adhered surface of said article oriented upward;
stripping side end of said film adhered to said outer surface of said article with a heated edge; and
clamping said side end of film stripped at said stripping step to further strip said film continuously.

9. The method according to claim 8, wherein said article is a cathode ray tube.

10. The method according to claim 8, wherein said film stripped at said stripping step automatically rolls up by itself due to tensile deformation and is collected.

## Amended claims

### Amended claims under Art. 19.1 PCT

**1.** An apparatus for stripping a film adhered to an outer surface of an article, said apparatus comprising:
a stage for mounting said article thereon with film-adhered surface of said article oriented upward;
stripping means having an edge for stripping at least one corner of upper and lower corners along side end of the film adhered to said outer surface of said article, said stripping means allowing said edge to be heated;
clamp means for clamping said side end of film, said side end being stripped by said stripping means; and
moving means for moving said clamp means.

**2.** The apparatus according to claim 1, wherein said edge of said stripping means is longer than a width of said film and has an inwardly curved shape, and wherein said edge of said stripping means permits abutting on said outer surface of said article mounted on said stage.

**3.** The apparatus according to claim 1, wherein said stripping means allows only an adhesive on the back of said film to soften.

**4.** The apparatus according to claim 1, wherein a temperature of said edge of said stripping means is set to close to a melting point of said adhesive on the back of said film by means of temperature regulation means.

**5.** The apparatus according to claim 1, wherein said edge of said stripping means comprises:
a sharp edge portion for cutting into a boundary between said outer surface of said article and said film; and
a dull edge portion for preventing a part of said film stripped by said sharp edge portion from being broken.

**6.** The apparatus according to claim 1, wherein said article is a cathode ray tube.

**7.** The apparatus according to claim 1, wherein said stripped film automatically rolls up by itself due to tensile deformation and is collected.

**8.** A method of stripping a film adhered to an outer surface of an article, said method comprising steps of:
mounting said article with film-adhered surface of said article oriented upward;
stripping side end of said film adhered to said outer surface of said article with a heated edge, starting with at least one corner of upper and lower corners along side end of said film, after said edge cuts into underside of said film and an adhesive, said edge being heated to a temperature close to a melting point of said adhesive; and
clamping said side end of film stripped at said stripping step to further strip said film continuously.

**9.** The method according to claim 8, wherein said article is a cathode ray tube.

**10.** The method according to claim 8, wherein said film stripped at said stripping step automatically rolls up by itself due to tensile deformation and is collected.
